# EUROPEAN PATENT APPLICATION

(11) **EP 3 736 253 A1**
(43) Date of publication of application: **11.11.2020**
(21) Application number: 19290029.8
(22) Date of filing: 06.05.2019
(51) Int. Cl.: C04B 18/02, C04B 28/04, C04B 40/00

(54) **METHOD OF PRODUCING PELLETS OF SYNTHETIC GYPSUM**

(71) Applicant: Holcim Technology Ltd, 8645 Jona (CH)
(72) Inventor: JACQUET, Alain, 5113 Holderbank (CH); GAUTHIER, Marie Christine, 5113 Holderbank (CH); DARMEDRU, Pierre, 5113 Holderbank (CH)
(74) Representative: Keschmann, Marc

(57) **Abstract**

A method of producing pellets of synthetic gypsum, comprising the steps of:
- providing synthetic gypsum in powder form,
- adding a setting accelerator to the synthetic gypsum, said setting accelerator being suitable to accelerate the setting of a hydraulic binder, preferably Portland cement,
- mixing the synthetic gypsum and the setting accelerator to obtain a mixture, said mixture being free of a hydraulic binder,
- compressing the mixture in a pelletizing device in order to obtain pellets

## Description

The invention refers to a method of producing pellets of synthetic gypsum.

The manufacturing of Portland requires a source of calcium sulphate in order to control the early reactivity of the aluminate phases of Portland clinker. Calcium sulphate is most often used in the form of gypsum (CaSO₄.2H₂O) or its dehydrated form anhydrite (CaSO₄).

Cement is a product that in most cases is used in locations relatively close to where it is manufactured. The production of cement requires the availability of a calcium sulphate source, this source being either natural or synthetic. However, the local availability of calcium sulphate is not guaranteed in all regions where cement is produced, either because of a lack of natural deposits of gypsum and/or because of the low availability of synthetic gypsum. Synthetic gypsum is in most cases a by-product of several industrial chemical processes, such as phosphoric acid production, flue-gas desulfurization in coal-fired power plants or from titanium industry for example.

Many sources of synthetic gypsum are produced by precipitation of salts in an aqueous solution and the final by-product is in powder form with a relatively high amount of water, typically up to 20 or 25 wt.-%. Because of its high humidity content, synthetic gypsum is difficult to handle in cement manufacturing plants, as the powder does not have good flowing capability. If stored in a large silo, synthetic gypsums can aggregate into larger elements that can block the silo, and render accurate dosing difficult in practice.

It was already proposed to transform synthetic gypsum into pellets in order to enhance its free-flowing properties and to enable its accurate dosing so as to overcome the problems mentioned above. For example, DE 3603596 A1 discloses a method of producing pellets from pulverulent synthetic gypsum, wherein synthetic gypsum is mixed with a binder, in particular Portland cement, and the mixture is agglomerated on a rotating pelletizing plate while moistening the mixture, in order to obtain agglomerates or pellets. In order to increase the early strength of the pellets, a setting accelerator is added to the mixture, which accelerates the setting of the hydraulic binder that is present in the mixture.

It is a purpose of this invention to provide an easy and stable process for the treatment of synthetic gypsums, in order to facilitate their use for the manufacturing of cement. In particular, the gypsum shall contribute to the desired properties of the cement, such as sufficient compressive strength and optimized setting times.

In order to solve these objectives, the invention provides a method of producing pellets of synthetic gypsum, comprising the steps of:
- providing synthetic gypsum in powder form,
- adding a setting accelerator to the synthetic gypsum, said setting accelerator being suitable to accelerate the setting of a hydraulic binder, preferably Portland cement,
- mixing the synthetic gypsum and the setting accelerator to obtain a mixture, said mixture being free of a hydraulic binder,
- compressing the mixture in a pelletizing device in order to obtain pellets.

It has been found that stable pellets may be obtained without requiring a binder, such as a hydraulic binder, present in the mixture, if the mixture is pelletized by compressing the mixture in a pelletizing device. The step of compressing the mixture results in a sufficient compaction of the pulverulent mixture to obtain pellets that may be stored and processed as additive in the production of a cement, even if the source of gypsum has a high moisture content, i.e. between 4 and 15 wt.-%.

Further, the addition of a setting accelerator to the synthetic gypsum results in an enhanced compressive strength and optimized setting times of cement that contains ground synthetic gypsum pellets obtained by the inventive method. Surprisingly, it was observed that the effect of the setting accelerator in the cement is more pronounced when the setting accelerator is added to the cement as an ingredient of the gypsum pellets when compared to the same amount of setting accelerator being added directly to the cement.

Preferably, the setting accelerator is a metal chloride, such as sodium chloride or calcium chloride.

Preferably, the setting accelerator, in particular sodium chloride, is present in the mixture in an amount comprised between 0.05 and 0.5 wt.-% and more preferably comprised between 0.05 and 0.2 wt.-%. In some applications, it may be necessary to limit the amount of accelerator in order to limit the amount of chloride in the cement, to comply with the requirements of cement standards.

Further, it has been observed that the residual moisture contained in the pulverulent synthetic gypsum can promote the stability of the pellets. Therefore, according to a preferred embodiment, the synthetic gypsum provided in powder form has a humidity content comprised between 6 and 15 wt.-%.

In order to further enhance the cohesion of the gypsum pellets, the mixture may preferably contain between 1 and 10 wt.-%, preferably between 1 and 4 wt.-%, of pregelatinized starch as an additive. Starch addition is able to improve fresh pellet plasticity, which improves its deformability and decreases its fragility.

Alternatively or in addition, the mixture may contain between 1 and 10 wt.-%, preferably between 1 and 5 wt.-%, of clay in powder form as an additive. Clay additives are able to adsorb water, improving pellets cohesion and thus the demolding of the pellets during their manufacturing process.

Another binding agent that may be used in order to improve the demolding of the fresh pellets is talc, wherein the final amount of talc in the pellet may be between 0.05 and 4.0 wt.-%, preferably between 0.05 and 1.0 wt.-%, even more preferably between 0.05 and 0.5 wt.-%. Talc is preferably used to cover the outer surface of the pellets. Talc may preferentially be sprayed onto the roller of the press prior to the production of the gypsum pellets in order to cover the outside of the said pellets, in order to further improve their demolding. In this latter embodiment, the total dosage of talc remains the same.

Without any additive, such as starch, talc and/or clay, it was possible to prepare pellets from synthetic gypsums having a humidity content comprised between 2 and 6 wt.-%.

The use of starch and talc enabled the production of pellets of synthetic gypsum that have a humidity content of up to 15 wt.-%, in particular 6-15 wt.-%.

The use of clay, such as CIMSIL A55G from the company Tolsa Group or PANGEL S9 from the company Tolsa Group, enabled the production of pellets from synthetic gypsum having a humidity level of 10 to 12 wt.-%.

As to the compaction of the pulverulent mixture, a preferred embodiment provides that the step of compressing the mixture in a pelletizing device comprises introducing the mixture into at least one cavity and compressing the mixture by applying a pressure of > 10 kN/cm², preferably > 20 kN/cm², more preferably > 30 kN/cm².

According to another aspect, the invention refers to a hydraulic binder composition comprising Portland cement and gypsum, wherein the gypsum is obtained by grinding gypsum pellets obtainable by or obtained by the inventive method described above.

In particular, the hydraulic binder contains between 2 and 7 wt.-% gypsum, more preferentially between 3 and 4 wt.-%. The invention will now be described in more detail with reference to the following examples. The examples were carried out with two different types of synthetic gypsum, wherein natural gypsum served as a reference example.

In the examples two sources of titanogypsum were used as summarised in the Table 1.

**Table 1**

| **Designation** | **Short name** | **Source** | **Bulk density** | **Gypsum (CaSO4. 2(H2O)) content in dried materials** |
|---|---|---|---|---|
| White titanogypsum | WT | Thann | 0.50 - 0.60 | 95 wt.-% |
| Red titanogypsum | RT | Thann | 0.90 - 1.00 | 75 wt.-% |
| Natural gypsum | NT | Almeria | Not measured | 99 wt.-% |

Several additives were tested to increase the cohesion of the pellets. They are summarised in Table 2

**Table 2**

| **Commercial name** | **Supplier** | **Product family** |
|---|---|---|
| Talc SP White 4010 | 20 Microns Limited | Talc |
| Pregelatinized wheat starch | Crespel & Deiters | Starch |

Further, the effect of accelerators was tested. The accelerator used in the examples is summarised in Table 3.

**Table 3**

| **Commercial name** | **Supplier** | **Product family** |
|---|---|---|
| Sodium chloride 99.8 wt.-% | Sigma-Aldrich | Salt |

### Process of preparation of gypsum pellets

The two types of synthetic gypsum were pelletized to obtain pellets having a dimension of about 3 cm length, 2 cm width, and 1 cm height using a pelletisation device. The pulverulent synthetic gypsum was fed into a pelletisation device at a given flow rate.

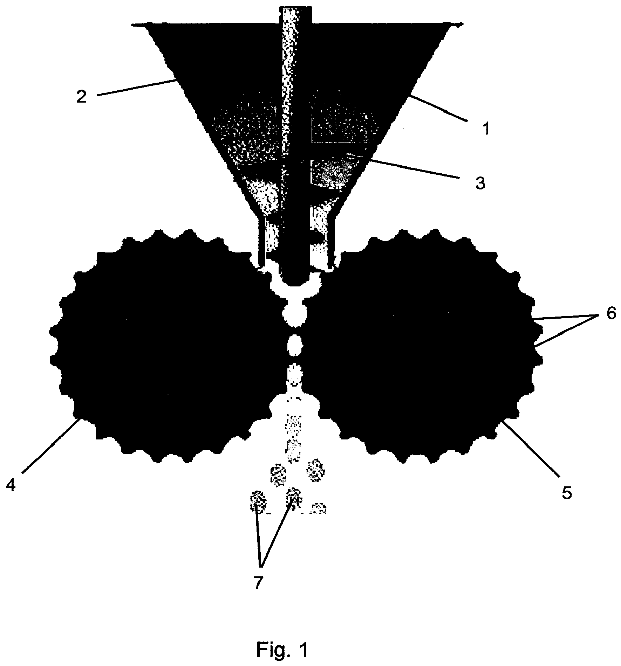

The pelletisation device used in the following examples was a commercial device composed of two rollers, where both rollers comprise indentations or cavities as shown in Fig. 1. The device shown in Fig. 1 comprises a funnel-shaped container 2 that contains the synthetic gypsum 1 in powder form and, as the case may be, further pulverulent components. The synthetic gypsum 1 is conveyed by means of a screw conveyor 3 (precompactor) to the bottom opening of the container 2 in order to feed the material towards an area between two counter-rotating rollers 4 and 5. The rollers 4 and 5 each have a plurality of indentations 6 on their cylindrical surfaces, wherein a pair of opposed indentations 6 temporarily each forms a cavity, in which the synthetic gypsum 3 is compacted, wherein the pellets 7 thereby obtained are ejected from the respective cavity upon further rotation of the rollers 4 and 5.

The pelletisation device used for the present examples had the following characteristics:
- Roller diameter: 800 mm
- Roller width: 180 mm
- Number of indentations in each roller: 420

The resulting pellets of synthetic gypsum had a shape of 36 x 27.8 x 15.5 mm.

In order to obtain an accurate measurement of the humidity content, all samples of synthetic gypsums were initially dried at 45°C until constant weight loss, and then a controlled amount of water was added to simulate humidity contents comprised between 2 and 20 wt.-% of the synthetic gypsum. To ensure that the re-humidified samples are homogeneous, they were stored in sealed vials for at least 24 hours at room temperature prior to the preparation of the pellets.

The process parameters summarised in Table 4 may be used for the preparation of the pellets.

**Table 4**

| **Applied pressure (kN/cm)** | **Rotation speed (rpm)** | **Gap between rollers (mm)** |
|---|---|---|
| 30 to 36 | 3 to 10 | 1 |
| 43 to 50 | 4 | 1 |

In order to prevent the synthetic gypsum from adhering to the rollers, several additives were used. Adhesion of the precipitated synthetic gypsum to the rollers results in the pellets breaking up instead of being released by the pelletisation device, and large amounts of precipitated synthetic gypsum remaining on the rollers. The additives are mixed with the synthetic gypsums in a first step.

The additive used in the examples was talc, sprinkled on the rollers to avoid sticking and improve demoulding. The added quantity on the surface of pellets is not known with precision but an evaluation lead to a dosage in the range of 0.1 to 0.5 wt.-%.

For the pellets to be easily handled during their production and then later being suitable for their use as an additive for the manufacturing of cement, they need to be able to have a compressive strength sufficient to withhold a weight of 20 to 30 kg.

The compressive strength of the pellets was assessed according to the following experimental protocol.

The pellet is positioned on a vertically mobile plate, and the plate is gradually moved upwards at a constant speed in the direction of an upper fixed plate. A 3000 N strength sensor positioned on the upper fixed plate then measures the strength resulting from the pellet moving against it, until the pellets starts cracking.

Various experimental tests were carried out with natural gypsum and with both sources of synthetic gypsum, as listed in Table 5.

**Table 5**

| Test | Test description | Total humidity content (wt.-%) | Natural gypsum content (wt.-%) | Red titanogypsum content, powder (wt.-%) | Red titanogypsum content, pellets (wt.-%) | White titanogypsum content, powder (wt.-%) | White titanogypsum content, pellets (wt.-%) |
|---|---|---|---|---|---|---|---|
| 1 | Natural gypsum reference | 0 | 100 | | | | |
| 2 | Powder reference | 2 | | 100 | | | |
| 3 | Powder + 0.08% NaCl | 2 | | 100 | | | |
| 4 | Powder + 0.16% NaCl | 2 | | 100 | | | |
| 5 | Pellet reference | 6 | | | 100 | | |
| 6 | Pellet + 0.1-0.2% talc | 11 | | | 100 | | |
| 7 | Pellet + 0.1-0.2% talc + 1% starch | 14 | | | 100 | | |
| 8 | Pellet + 0.1-0.2% talc + 0.08% NaCl | 11 | | | 100 | | |
| 9 | Pellet + 0.1-0.2% talc + 0.16% NaCl | 11 | | | 100 | | |
| 10 | Powder reference | 0 | | | | 100 | |
| 11 | Powder + 0.08% NaCl | 0 | | | | 100 | |
| 12 | Powder + 0.16% NaCl | 0 | | | | 100 | |
| 13 | Pellet reference | 5 | | | | | 100 |
| 14 | Pellet + 0.1-0.2% talc + 2.2% starch | 12 | | | | | 100 |
| 15 | Pellet + 0.1-0.2% talc + 0.08% NaCl | 8 | | | | | 100 |
| 16 | Pellet + 0.1-0.2% talc + 0.16% NaCl | 8 | | | | | 100 |
| 17 | Mix pellets | 10 | | | 50 | | 50 |
| 18 | Mix pellets + 0.1-0.2% talc | 13 | | | 50 | | 50 |

The experimental tests 8, 9, 15 and 16 refer to pellets according to the invention, whereas experimental tests 1-7, 10-14, 17 and 18 served as reference examples.

The gypsum of the experimental tests of Table 5 were used for producing cement samples, in order to measure initial setting times and compressive strength. The gypsum of experimental tests 1-4 and 10-12 was present in powder form and could directly be used for preparing the cement samples. The gypsum of experimental tests 5-9 and 13-18 was present in the form of pellets, wherein the pellets were first ground (together with the clinker) and the obtained powder was used for preparing the cement samples.

The following process was used for preparing the cement samples:
- Grinding of clinker and pellets at 100°C, target Blaine 3800 cm²/g +/-100 cm²/g.
- Clinker from Saint Pierre La Cour
- The gypsum content was adjusted to be at the optimal content of added sulphates in the cement, which is 3.56 wt.-% of the weight of clinker. Sulphates are expressed as SO₃.

The compressive strength and the setting times of the cement samples were tested according to cement standards, respectively NF EN 196-1 of September 2016 and EN 196-3 of September 2017. The compressive strength was measured after curing for 1 and for 28 days.

The results of the tests, as summarised below, show that is was possible to prepare pellets of synthetic gypsum that were suitable for their handling during the production of cement.

### Results regarding setting times:

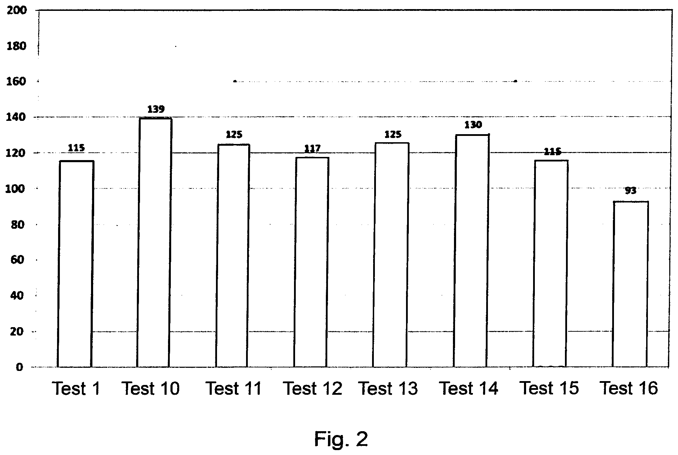

The initial setting times [minutes] of cements prepared with different types of pellets of synthetic gypsum are given in Fig. 2, compared to a cement prepared with a good quality source of natural gypsum.

The following observations could be made:
- The use of synthetic gypsum in powder form increases the initial setting time by 30 minutes to about 1 hour depending on the source of synthetic gypsum, when compared to a cement prepared with natural gypsum (see the difference between test no. 1 and test no. 10 in Fig. 2);
- The fact of using pellets of synthetic gypsum instead of synthetic gypsum in powder reduces the setting time by 10 to 15 minutes (see the difference between tests no. 10 and test no. 13 in Fig. 2);
- The addition of talc or starch to the pellets of synthetic gypsum does not significantly affect the setting times (see the minor difference between test no. 13 and test no. 14 in Fig. 2);
- The addition of sodium chloride, a known accelerator of Portland cement, further reduces the initial setting time (see the difference between test no. 14 and test no. 15 in Fig. 2);
- The acceleration effect on setting times due to the addition of an accelerator is more pronounced when the synthetic gypsum is in pellets rather than in powder form (see the reduction in setting time from 139 to 117 min. between tests nos. 10 and 12 when compared to the reduction in setting time from 130 to 93 min. between tests nos. 14 and 16 in Fig. 2)
- The addition of a small amount of sodium chloride, here about 0.08 wt.-% to pellets of synthetic gypsum seems sufficient to reach the same initial setting time as with the natural gypsum (see test no. 15 compared to test no. 1 in Fig. 2);

### Results regarding compressive strength:

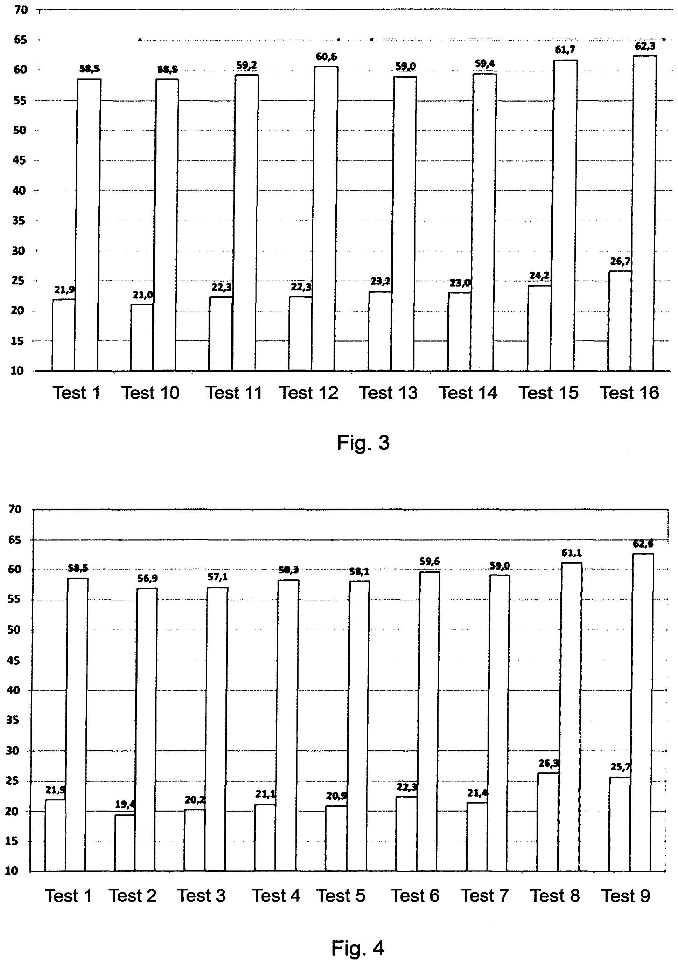

The compressive strength values [MPa] of binders prepared with different types of pellets of synthetic gypsum are given in figures 3 and 4, compared to a cement prepared with a good quality source of natural gypsum. The lower columns each represent the compressive strength after 1 day. The higher columns each represent the compressive strength after 28 days.

The following observations can be made:
- The use of pellets of synthetic gypsum instead of a powder of synthetic gypsum increase the compressive strength at 1 and 28 days by about 1 to 2 MPa (see tests nos. 15 and 16 when compared to tests nos. 11 and 12 in Fig. 3; and tests nos. 8 and 9 when compared to tests nos. 3 and 4 in Fig. 4);
- The addition of talc or starch does not have a significant effect on strength development (see test no. 14 compared to test no. 13 in Fig. 3 and tests no. 6 and 7 compared to test no. 5 in Fig. 4);
- The addition of sodium chloride further increases the compressive strength, both when powder and pellets are used (see test no. 11 compared to test no. 10 and test no. 15 compared to test no. 14 in Fig. 3 as well as test no. 3 compared to test no. 2 and test no. 8 compared to test no. 7 in Fig. 4);
- The addition of about 0.08 wt.-% of sodium chloride is sufficient to overcome the loss of reactivity due to using synthetic gypsum instead of natural gypsum;
- It seems that the addition of sodium chloride to the pellets has a higher effect that when it is added to the powder of synthetic gypsum (see the increase in compressive strength after 1 day from 23.0 to 26.7 MPa between tests nos. 14 and 16 when compared to the increase in compressive strength after 1 day from 21.0 to 22.3 MPa between tests nos. 10 and 12 in Fig. 3).

## Claims

1. A method of producing pellets of synthetic gypsum, comprising the steps of:
- providing synthetic gypsum in powder form,
- adding a setting accelerator to the synthetic gypsum, said setting accelerator being suitable to accelerate the setting of a hydraulic binder, preferably Portland cement,
- mixing the synthetic gypsum and the setting accelerator to obtain a mixture, said mixture being free of a hydraulic binder,
- compressing the mixture in a pelletizing device in order to obtain pellets.

2. Method according to claim 1, wherein the setting accelerator is a metal chloride, such as sodium chloride or calcium chloride.

3. Method according to claim 1 or 2, wherein the setting accelerator, in particular sodium chloride, is present in the mixture in an amount of 0.05-0.5 wt.-%, preferably 0.05-0.2 wt.-%.

4. Method according to claim 1, 2 or 3, wherein the synthetic gypsum provided in powder form has a humidity content of 6-15 wt.-%.

5. Method according to any one of claims 1 to 4, wherein said mixture contains 1-10 wt.-%, preferably 1-4 wt.-% starch as an additive.

6. Method according to any one of claims 1 to 5, wherein said mixture contains 1-10 wt.-%, preferably 1-5 wt.-% clay in powder form as an additive.

7. Method according to any one of claims 1 to 6, wherein talc is added so that the talc content in the pellets is 0.05-4.0 wt.-%, more preferentially 0.05 to 0.5 wt.-%.

8. Method according to any one of claims 1 to 7, wherein the step of compressing the mixture in a pelletizing device comprises introducing the mixture into at least one cavity and compressing the mixture by applying a pressure of > 10 kN/cm², preferably > 20 kN/cm², more preferably > 30 kN/cm².

9. Method according to claim 8, wherein talc is sprayed into said at least one cavity before introducing the mixture into the cavity.

10. A hydraulic binder composition comprising Portland cement and gypsum, wherein the gypsum is obtained by grinding gypsum pellets obtainable by or obtained by a method according to any one of claims 1 to 9.

11. Hydraulic binder according to claim 10, wherein the hydraulic binder contains 2-7 wt.-% gypsum, preferably 3-4 wt.-% gypsum.
